(19) Europäisches Patentamt
European Patent Office
Office européen des brevets

(11) **EP 1 542 879 B1**

(12) **FASCICULE DE BREVET EUROPEEN**

(45) Date de publication et mention
de la délivrance du brevet:
**12.09.2007  Bulletin 2007/37**

(51) Int Cl.:
***B60H 1/00*** *(2006.01)*       ***B60H 1/32*** *(2006.01)*
***F24F 11/00*** *(2006.01)*

(21) Numéro de dépôt: 03798225.3

(22) Date de dépôt: **25.09.2003**

(86) Numéro de dépôt international:
**PCT/FR2003/002818**

(87) Numéro de publication internationale:
**WO 2004/028841 (08.04.2004 Gazette 2004/15)**

(54) **INSTALLATION DE CLIMATISATION MUNIE D'UN DISPOSITIF DE DETECTION ET D'ESTIMATION DE L'HUMIDITE DE L'AIR**

MIT EINER VORRICHTUNG ZUM ERFASSEN UND SCHÜTZEN VON ATMOSPHÄRENFEUCHTIGKEIT AUSGESTATTETE KLIMAANLAGE

AIR CONDITIONING UNIT EQUIPPED WITH A DEVICE FOR DETECTING AND ESTIMATING ATMOSPHERIC MOISTURE

(84) Etats contractants désignés:
**AT BE BG CH CY CZ DE DK EE ES FI FR GB GR HU IE IT LI LU MC NL PT RO SE SI SK TR**

(30) Priorité: **27.09.2002  FR 0211987**

(43) Date de publication de la demande:
**22.06.2005  Bulletin 2005/25**

(73) Titulaire: **Valeo Systèmes Thermiques
78321 Le Mesnil St Denis Cedex (FR)**

(72) Inventeur: **BEN YAHIA, Mohamed
F-75005 Paris (FR)**

(56) Documents cités:
**US-A- 5 435 146          US-A1- 2001 047 658
US-A1- 2002 023 451      US-A1- 2002 095 942**

**EP 1 542 879 B1**

## Description

L'invention concerne les circuits de climatisation, notamment pour véhicules à moteur.

Une boucle de climatisation classique comporte un compresseur, un organe de refroidissement, un organe de détente et un évaporateur parcourus, dans cet ordre, par un fluide frigorigène. L'évaporateur reçoit un flux d'air d'un pulseur alimenté par un flux d'air extérieur pour produire un flux d'air climatisé qui est envoyé dans le local à refroidir. La vaporisation du fluide frigorigène dans l'évaporateur est obtenue en prélevant de la chaleur au fluide d'air reçu, produisant ainsi le flux d'air climatisé.

Dans les boucles de climatisation pour véhicule à moteur, la puissance absorbée par le compresseur est utilisée pour produire le flux d'air climatisé (puissance sensible) mais aussi pour condenser l'eau contenue dans le flux d'air extérieur reçu par l'évaporateur (puissance latente). L'humidité du flux d'air reçu par l'évaporateur peut donc augmenter la puissance consommée par la climatisation. Il est donc souhaitable d'estimer cette humidité pour ajuster la consommation du circuit de climatisation.

Par ailleurs, ce contrôle de l'humidité doit tenir compte du confort de l'habitacle. L'humidité de l'habitacle, tout comme la température de l'habitacle, peut être responsable de la sensation de confort ou d'inconfort des passagers. En effet, une température élevée s'accompagne d'une humidité absolue de l'air importante, qui au-delà d'un certain seuil, devient incommodante. De même, une humidité trop faible n'est pas propice au confort des passagers. Par suite, l'humidité du flux d'air dans l'habitacle doit être contrôlée pour être maintenue dans un intervalle prédéterminé.

La connaissance de l'humidité du flux d'air soufflé à l'entrée de l'évaporateur peut permettre d'ajuster le fonctionnement du circuit de climatisation pour réduire la puissance consommée par la climatisation et conserver des conditions de confort acceptables.

Dans des réalisations existantes, on utilise des capteurs d'humidité placés dans l'appareil de climatisation afin d'évaluer l'humidité du flux d'air reçu par l'évaporateur et/ou l'humidité de l'air dans l'habitacle. Ces capteurs mesurent l'humidité relative de l'air, qui correspond au rapport, exprimé en pourcentage, entre la masse d'eau contenue dans l'air et la masse d'eau que contiendrait le même volume d'air, dans les mêmes conditions, s'il était saturé d'eau. Mais de tels capteurs ont l'inconvénient d'avoir une durée de vie faible et d'augmenter le coût de l'installation.

Dans d'autres réalisations, on estime l'humidité relative du flux d'air soufflé à l'entrée de l'évaporateur à partir d'une mesure de la température de ce flux d'air, de la température du fluide frigorigène dans une zone de l'évaporateur, et de la température du flux d'air soufflé en sortie de l'évaporateur. Cependant, la température du fluide frigorigène varie en fonction du point de mesure choisi dans la zone de l'évaporateur, et par suite l'estimation de l'humidité relative est peu précise.

Dans d'autres réalisations encore, l'estimation de l'humidité relative du flux d'air soufflé à l'entrée de l'évaporateur est réalisée à partir d'une mesure de la température de ce flux d'air, et d'une mesure de la température en un point de la canalisation du circuit de climatisation, situé au voisinage et en amont de l'évaporateur. Cette deuxième mesure est obtenue par l'utilisation d'un conducteur de chaleur raccordé à la canalisation au voisinage et en amont de l'évaporateur et d'une sonde de température fixée sur ce conducteur. De telles réalisations nécessitent un agencement particulier pour raccorder le conducteur de chaleur. De plus, elles utilisent trois capteurs de température en plus des capteurs installés dans les circuits de climatisations classiques et fournissent une estimation de l'humidité relative du flux d'air soufflé à l'entrée de l'évaporateur après un temps de mise en route.

US 2002/0095942A1 décrit une installation de climatisation selon le préambule de la revendication 1.

Le but de l'invention est de fournir une installation de climatisation capable de détecter un air humide en amont de l'évaporateur et d'estimer l'humidité relative de ce flux d'air par des moyens simples et économiques.

C'est encore un but de la présente invention de fournir une telle installation n'utilisant pas d'autres capteurs de température que ceux qui se trouvent sur les installations de climatisations classiques.

Un autre but de l'invention est de fournir une telle installation capable de prédire l'évolution de l'humidité absolue de l'habitacle à partir de cette estimation de l'humidité relative du flux d'air en amont de l'évaporateur à un instant donné.

L'invention propose à cet effet une installation de climatisation pour véhicule à moteur munie d'un circuit de fluide frigorigène comprenant un compresseur, un organe de refroidissement, un organe de détente et un évaporateur, ce dernier recevant en entrée un flux d'air provenant d'un pulseur pour produire en sortie un flux d'air climatisé. L'installation comporte en outre un dispositif électronique destiné à interagir avec le circuit de fluide frigorigène. Avantageusement, l'installation comprend :

- un dispositif d'estimation du débit massique du fluide frigorigène dans le circuit,
- des premiers moyens d'estimation propres à fournir une valeur relative à la température de l'air à l'entrée de l'évaporateur,
- des deuxièmes moyens d'estimation propres à fournir une valeur relative à la température de l'air à la sortie de l'évaporateur,

le dispositif électronique de contrôle étant apte à détecter un air humide à l'entrée de l'évaporateur à partir de la valeur fournie par le dispositif d'estimation du débit massique du fluide frigorigène, et des valeurs fournies par les premier et les deuxièmes moyens d'estimation.

Selon un autre aspect de l'invention, le dispositif électronique de contrôle est apte à réagir à la détection d'un air humide à l'entrée de l'évaporateur en estimant l'humidité relative de l'air à l'entrée de l'évaporateur à partir de la valeur fournie par le dispositif d'estimation du débit massique du fluide frigorigène et des valeurs fournies par les premiers et les deuxièmes moyens d'estimation.

L'installation est agencée pour fournir une estimation de la puissance frigorifique et une estimation de la puissance sensible de l'air dans l'évaporateur tandis que le dispositif électronique de contrôle est capable de détecter un air humide à l'entrée de l'évaporateur en comparant ladite estimation de la puissance frigorifique à l'estimation de la puissance sensible de l'air.

En particulier, le dispositif électronique de contrôle est apte à estimer la puissance frigorifique à partir de la valeur de la différence d'enthalpie du fluide frigorigène entre l'entrée et la sortie de l'évaporateur et de la valeur fournie par le dispositif d'estimation du débit massique du fluide frigorigène.

L'installation comporte en outre des moyens d'estimation propres à fournir :

- une valeur relative à la pression du fluide en sortie du compresseur et
- une valeur relative à la pression du fluide en entrée du compresseur,

le dispositif électronique étant apte à calculer la différence d'enthalpie du fluide entre l'entrée et la sortie de l'évaporateur à partir des valeurs fournies par ces moyens d'estimation.

En complément, le dispositif électronique de contrôle est apte à estimer la puissance sensible de l'air dans l'évaporateur à partir des valeurs fournies par les premiers et deuxièmes moyens d'estimation et de la valeur du débit massique d'air dans l'évaporateur.

L'installation comprend avantageusement une sonde de température propre à fournir la température de l'air extérieur au véhicule tandis que le dispositif électronique de contrôle est apte à estimer la valeur du débit massique d'air dans l'évaporateur à partir de la position du pulseur, de la vitesse d'avancement du véhicule et de la température de l'air extérieur au véhicule.

Selon un premier mode de réalisation de l'invention, l'installation comprend des moyens de mémoire ayant une première table à deux entrées et à une sortie, cette table étant remplie en fonction de données préalables sur la relation entre l'humidité relative de l'air, la température de l'air et l'enthalpie de l'air.

En particulier, la première table est apte à fournir une estimation de l'enthalpie de l'air à la sortie de l'évaporateur à partir de la valeur fournie par les deuxièmes moyens d'estimation et d'une valeur d'humidité relative de l'air en sortie de l'évaporateur supérieure ou égale à 80%.

Selon un deuxième mode de réalisation, le dispositif électronique de contrôle est apte à mettre en oeuvre la résolution d'une équation pour calculer une estimation de l'enthalpie de l'air à la sortie de l'évaporateur à partir de la valeur fournie par les deuxièmes moyens d'estimation et d'une valeur d'humidité relative de l'air en sortie de l'évaporateur supérieure ou égale à 80%.

Selon ces modes de réalisation, le dispositif électronique de contrôle est apte à fournir une estimation de l'enthalpie de l'air à l'entrée de l'évaporateur à partir de la valeur de l'enthalpie de l'air à la sortie de l'évaporateur et de la valeur de la puissance frigorifique.

Selon le premier mode de réalisation, la première table est propre à fournir instantanément une estimation de l'humidité relative de l'air à l'entrée de l'évaporateur à partir de l'estimation de l'enthalpie de l'air à l'entrée de l'évaporateur et de la valeur fournie par les premiers moyens d'estimation.

Selon le deuxième mode de réalisation, le dispositif électronique de contrôle est apte à mettre en oeuvre la résolution d'une équation pour estimer l'humidité relative de l'air à l'entrée de l'évaporateur à partir de l'estimation de l'enthalpie de l'air à l'entrée de l'évaporateur et de la valeur fournie par les premiers moyens d'estimation.

En complément, selon le premier mode de réalisation, les moyens de mémoire peuvent comprendre une deuxième table à deux entrées et à une sortie, cette table étant remplie en fonction de données préalables sur la relation entre l'humidité absolue de l'air, la température de l'air et l'enthalpie de l'air, et la deuxième table est apte à fournir la valeur de l'humidité absolue de l'air à la sortie de l'évaporateur à partir de la valeur de l'enthalpie de l'air soufflé à la sortie de l'évaporateur fournie par la première table et de la valeur de la température à l'entrée de l'évaporateur.

En variante, le dispositif électronique de contrôle est apte à mettre en oeuvre la résolution d'une équation liant l'humidité absolue de l'air, la température de l'air et l'enthalpie de l'air, pour calculer une estimation de la valeur de l'humidité absolue de l'air à la sortie de l'évaporateur à partir de la valeur de l'enthalpie de l'air soufflé à la sortie de l'évaporateur et de la valeur de la température à l'entrée de l'évaporateur.

Le dispositif électronique de contrôle est alors apte à mettre en oeuvre la résolution d'une équation liant la valeur de l'humidité absolue de l'air dans l'habitacle et la valeur de l'humidité absolue de l'air soufflé à la sortie de l'évaporateur à un instant donné, pour prévoir l'évolution de l'humidité absolue de l'air dans l'habitacle en fonction de l'humidité absolue de l'air soufflé à la sortie de l'évaporateur.

Selon une autre caractéristique de l'invention, l'organe de refroidissement est un condenseur et le dispositif d'estimation du débit massique du fluide frigorigène comprend des moyens d'estimation propres à fournir :

- une valeur relative à la pression du fluide en sortie du compresseur, et
- une valeur relative à la température du flux d'air extérieur à l'entrée du condenseur, tandis que le dispositif électronique de contrôle est apte à estimer la valeur du débit massique du fluide frigorigène à partir des valeurs fournies par les moyens d'estimation.

Les premiers moyens d'estimation comprennent une sonde de température propre à fournir la valeur de la température de l'air à l'entrée de l'évaporateur, placée en amont de l'évaporateur.

En variante, les premiers moyens d'estimation peuvent comprendre une sonde de température propre à fournir la valeur de la température de l'air à l'extérieur du véhicule et en ce que le dispositif électronique de contrôle est apte à estimer la température de l'air à l'entrée de l'évaporateur à partir de cette valeur et d'un facteur de correction prédéfini.

En variante, l'installation peut comporter un volet d'entrée d'air en amont de l'évaporateur à position variable pour permettre le mélange d'air extérieur au véhicule et d'air repris dans l'habitacle du véhicule, et en ce que les premiers moyens d'estimation comprennent deux sondes de température propres à fournir une mesure de la température du flux d'air extérieur au véhicule et une mesure de la température de l'habitacle, le dispositif électronique de contrôle étant apte à estimer la température de l'air à l'entrée de l'évaporateur à partir de ces valeurs et de la position du volet d'entrée d'air.

Les deuxièmes moyens d'estimation comprennent une sonde de température propre à fournir la valeur de la température de l'air en sortie de l'évaporateur, placée à la sortie de l'évaporateur.

En variante, l'installation comprend une bouche d'aération reliée à l'évaporateur par un conduit d'aération pour recevoir le flux d'air climatisé produit, et les deuxièmes moyens d'estimation comprennent une sonde de température placée sur ledit conduit d'aération, le dispositif électronique de contrôle étant apte à estimer la température de l'air en sortie de l'évaporateur à partir de la température mesurée par ladite sonde de température et d'un facteur de correction prédéfini.

D'autres caractéristiques et avantages de l'invention apparaîtront à l'examen de la description détaillée ci-après, et des dessins annexés sur lesquels:

- la figure 1a est une vue d'ensemble d'un dispositif de climatisation installé à bord d'un véhicule, pour un fluide frigorigène sous-critique
- la figure 1b est un schéma d'un circuit de climatisation pour un fluide frigorigène super-critique,
- la figure 2 est un schéma d'une installation de véhicule automobile à moteur, munie du dispositif de contrôle selon l'invention,
- la figure 3 est un organigramme illustrant les différentes étapes réalisées par l'installation, selon l'invention, pour détecter un air humide à l'entrée de l'évaporateur et estimer l'humidité relative de l'air,
- la figure 4 représente un exemple de diagramme psychrométrique de l'air humide,
- la figure 5 est un autre exemple de diagramme psychrométrique de l'air humide montrant les différences entre un air très humide en entrée de l'évaporateur et un air peu humide en entrée de l'évaporateur,
- la figure 6a est un diagramme de Mollier, qui en relation avec la figure 5, illustre les différences de consommation entre un cycle de climatisation d'un fluide sous-critique utilisant un air très humide en entrée de l'évaporateur et un cycle de climatisation utilisant un air peu humide en entrée de l'évaporateur, et
- la figure 6b est un diagramme de Mollier, qui en relation avec la figure 5, illustre les différences de consommation entre un cycle de climatisation d'un fluide super-critique utilisant un air très humide en entrée de l'évaporateur et un cycle de climatisation utilisant un air peu humide en entrée de l'évaporateur.

L'annexe A comporte les équations mathématiques principales utilisées dans l'installation.

On se réfère tout d'abord à la figure 1a qui représente une vue d'ensemble d'un appareil de climatisation intégré à un véhicule. L'appareil de climatisation comprend un circuit fermé de fluide frigorigène. L'appareil de climatisation comprend également un compresseur 14, un organe de refroidissement 11, un organe de détente 12 et un évaporateur 13, parcourus dans cet ordre par le fluide frigorigène. Le circuit peut également comporter un accumulateur 17 placé entre la sortie de l'évaporateur et l'entrée du compresseur pour éviter les coups de liquide.

L'organe de refroidissement 11 reçoit un flux d'air extérieur 16 pour évacuer la chaleur prélevée dans l'habitacle, qui dans certaines conditions de fonctionnement est mis en mouvement par un groupe moto-ventilateur 15.

L'évaporateur 13 reçoit un flux d'air d'un pulseur 20 alimenté par un flux d'air extérieur 18 et produit un flux d'air climatisé 21 qui est envoyé vers l'habitacle du véhicule.

L'installation comprend, en outre, en amont de l'évaporateur une boîte d'entrée d'air, non représentée, dans laquelle arrive une quantité d'air neuf provenant de l'extérieur du véhicule et une quantité d'air recyclé provenant de l'habitacle. Le rapport entre la quantité d'air neuf et la quantité d'air recyclé est fixé par un volet d'entrée d'air dont la position est choisie en fonction des conditions de fonctionnement du circuit de climatisation.

L'eau contenue dans l'air se condense sous l'effet du refroidissement et vient se déposer sur les ailettes de l'évaporateur. L'évaporateur peut être assorti d'un vase pour recueillir cette eau qui se forme sur les ailettes de l'évaporateur.

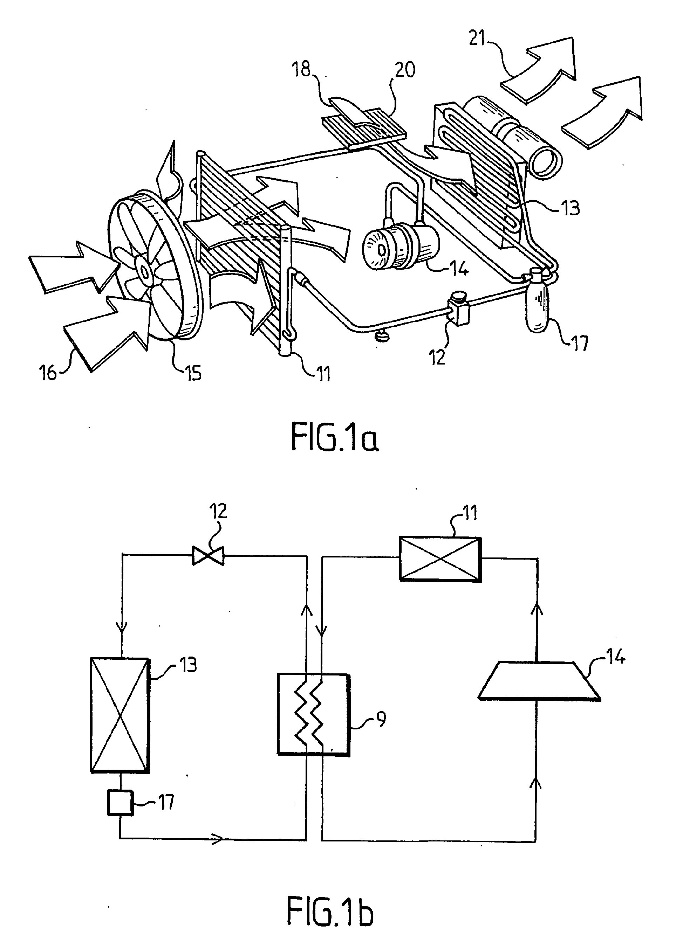

Dans l'exemple de la figure 1a, le circuit de climatisation est parcouru par un fluide frigorigène sous-critique, par exemple le fluide frigorigène R134a. Un tel fluide a une pression critique supérieure à la pression de la source chaude. Dans les circuits de climatisation utilisant de tels fluides, comme celui représenté sur la figure 1, l'organe de refroidissement 11 est un condenseur. L'organe de détente peut être par exemple un orifice calibré ou un détendeur thermostatique.

Toutefois, l'invention n'est pas limitée à des circuits de climatisation fonctionnant avec des fluides frigorigènes sous-critiques et munis d'un organe de refroidissement du type condenseur.

En particulier, le circuit de climatisation peut-être parcouru par un fluide frigorigène supercritique, par exemple le fluide frigorigène $CO_2$. Pour les fluides supercritiques, la haute pression à forte température est supérieure à la pression critique du fluide. La figure 1b représente un circuit de climatisation fonctionnant avec le fluide supercritique $CO_2$. Dans un tel circuit, l'organe de refroidissement 11 est un refroidisseur externe ("gas cooler"). L'organe de détente 12 peut être par exemple une type vanne électrique ou une vanne mécanique. Le circuit comporte un évaporateur 13, un accumulateur 17 et un compresseur 14 fonctionnant tel que décrit ci-avant. Le circuit comporte en outre un échangeur thermique interne 9.

Dans les circuits de climatisation utilisant un fluide supercritique, le refroidissement du fluide après compression n'entraîne pas de changement de phase. Le fluide ne passe à l'état liquide qu'au cours de la détente. L'échangeur thermique interne 9 permet de refroidir très fortement, voire de liquéfier le fluide sortant du refroidisseur externe 11.

Dans la suite, la description sera faite en référence au circuit de climatisation de la figure 1 fonctionnant avec un fluide sous-critique tel que le R134a, à titre d'exemple non limitatif.

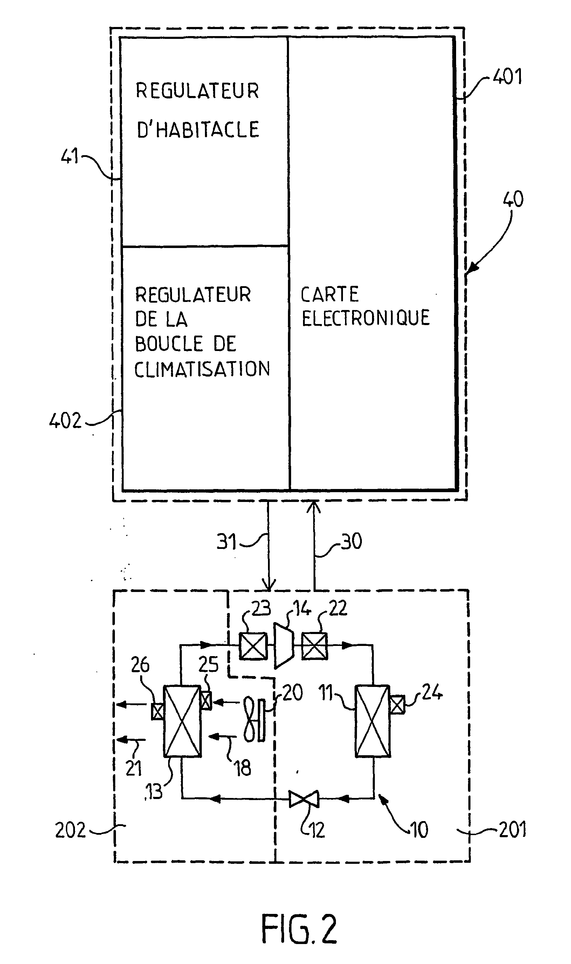

La figure 2 est un schéma représentant l'installation selon l'invention mise en place dans un véhicule automobile. Le véhicule est équipé de l'appareil de climatisation 10 décrit en référence à la figure 1a. De plus, l'installation est munie d'un calculateur de climatisation 40, comprenant un régulateur d'habitacle 41 et un régulateur de boucle de climatisation 402. Le régulateur d'habitacle 41 est destiné à fixer la consigne de température de l'air extérieur 18 pulsé à l'entrée de l'évaporateur 13.

L'évaporateur 11 ainsi que le pulseur 20 sont situés dans le compartiment habitacle 202 et les autres éléments de l'appareil de climatisation 10 sont situés dans le compartiment moteur 201.

La Demanderesse a mis au point un dispositif capable de détecter un air humide à l'entrée de l'évaporateur et le cas échéant de fournir une estimation de l'humidité relative $\varphi_{ae}$ de l'air à l'entrée de l'évaporateur, à partir de la valeur du débit de fluide frigorigène m, de la valeur de la température $T_{ae}$ du flux d'air pulsé à l'entrée de l'évaporateur et de la température $T_{as}$ du flux d'air soufflé en sortie de l'évaporateur.

En complément, la Demanderesse propose un tel dispositif capable d'estimer l'humidité absolue $W_{hab}$ de l'habitacle afin, notamment, d'ajuster la consommation de la climatisation.

Pour cela, le régulateur de l'habitacle 41 et l'appareil de climatisation 10 sont reliés à un dispositif électronique de contrôle, par exemple une carte électronique 401 pour un échange d'informations.

La carte électronique 401 est programmée pour résoudre les équations permettant de détecter les points humides et d'estimer l'humidité relative de ces points.

La carte électronique 401 peut être agencée pour transmettre les informations qui résultent de ces estimations au calculateur d'injection du véhicule, lorsque le véhicule en est muni.

La carte électronique 401 peut-être considérée comme partie intégrante du calculateur de climatisation 40 du véhicule.

Elle est en liaison avec le régulateur de boucle de climatisation 402, ce dernier ayant notamment le rôle d'adapter la quantité de chaleur prélevée dans l'habitacle, dite puissance frigorifique, pour atteindre la consigne de température d'air soufflé à la sortie de l'évaporateur ou la consigne de la sonde de l'habitacle.

Selon un premier mode de réalisation de l'invention, la carte électronique peut être reliée à des moyens de mémoire comprenant une première table à deux entrées et à une sortie. La première table comporte des valeurs pré-calculées de l'humidité relative de l'air $\varphi$. Ces valeurs sont obtenues à partir d'une équation liant l'humidité relative de l'air $\varphi$ à la température et à l'enthalpie de l'air, et correspondent chacune à une valeur donnée de la température et de l'enthalpie de l'air.

Les moyens de mémoire sont fournis par le calculateur de climatisation 40 et constituent une sorte de cartographie correspondant au diagramme psychrométrique de l'air humide.

Selon un deuxième mode de réalisation de l'invention, la carte électronique peut être programmée pour mettre en oeuvre la résolution d'une équation liant l'humidité relative de l'air φ à la température et à l'enthalpie de l'air.

En complément, selon le premier mode de réalisation, les moyens de mémoire peuvent comprendre une deuxième table à deux entrées et une sortie, dans laquelle sont stockées des valeurs pré-calculées de l'humidité absolue de l'air W, en fonction de valeur de la température de l'air et de l'enthalpie de l'air. La description qui suit se référera à ce mode de réalisation.

En variante, selon le deuxième mode de réalisation, la carte électronique peut être programmée pour mettre en oeuvre la résolution d'une équation liant l'humidité absolue de l'air W à la température et à l'enthalpie de l'air.

La carte électronique peut donc interagir avec les moyens de mémoire ou mettre en oeuvre la résolution d'équation pour estimer l'humidité relative $\varphi_{ae}$ de l'air à l'entrée de l'évaporateur et l'humidité absolue W de l'habitacle. La description ci-après sera faite en référence au premier mode de réalisation relatif aux moyens de mémoire.

La carte électronique 401 interagit avec l'appareil de climatisation 10 par les liaisons 30 et 31 pour recevoir des informations provenant de capteurs, et notamment les valeurs du débit de fluide frigorigène m, de la température $T_{ae}$ du flux d'air soufflé à l'entrée de l'évaporateur et de la température $T_{as}$ du flux d'air soufflé en sortie de l'évaporateur. Ces valeurs sont transmises à la carte électronique via la liaison 30.

En complément, l'installation de climatisation selon l'invention comprend un dispositif d'estimation du débit de fluide frigorigène. Un tel dispositif a été décrit, par exemple, dans la demande de brevet français n°01 16568. Dans un tel dispositif, l'organe de refroidissement est un condenseur, ce qui permet l'utilisation d'un fluide frigorigène sous-critique, tel que le fluide frigorigène R134a. Le dispositif d'estimation du débit de fluide frigorigène du brevet français n°01 16568 comprend des organes de mesures permettant d'établir des valeurs relatives à la température du flux d'air extérieur à l'entrée du condenseur $T_{aek}$ et à la pression HP du fluide frigorigène en sortie du compresseur, dite haute pression. La carte électronique fait également partie de ce dispositif et met en oeuvre l'équation de l'annexe A1 pour calculer une estimation du débit de fluide frigorigène dans le circuit de climatisation à partir des valeurs de la température du flux d'air extérieur soufflé à l'entrée du condenseur $T_{aek}$, et de la pression du fluide frigorigène en sortie du compresseur HP. Ces valeurs sont fournies par différents capteurs.

La relation de l'annexe A1 indique que la connaissance de la température de condensation $T_k$, de la température de l'air extérieur à l'entrée du condenseur $T_{aek}$ et de la constante A permettent d'estimer le débit massique m du fluide frigorigène.

Dans un mode de réalisation particulier de la demande de brevet français n°01 16568, le dispositif d'estimation du débit de fluide frigorigène comprend deux capteurs pour mesurer la température de condensation $T_k$, et la température de l'air extérieur à l'entrée du condenseur $T_{aek}$. La température de condensation $T_k$ est liée à la haute pression par la loi de saturation des fluides.

La température de condensation $T_k$ peut être mesurée par une sonde de température placée à l'entrée du condenseur directement au sein du fluide frigorigène. Cet emplacement est choisi tel que le fluide frigorigène soit dans un état de mélange liquide /vapeur, par exemple à la fin de la première passe du condenseur si ce dernier contient 4 passes.

En variante, la température condensation $T_k$ peut-être mesurée indirectement. Pour cela, on utilise le capteur 22 de la figure 2 qui mesure la valeur de la haute pression HP en sortie du compresseur. La carte électronique 401 calculera alors la valeur de la température de condensation $T_k$ en utilisant la loi de saturation des fluides. Le capteur 22 qui mesure la valeur instantanée de la haute pression HP peut-être placé à tout endroit approprié entre la sortie du compresseur et l'entrée du condenseur ou de préférence entre la sortie du condenseur et l'entrée du détendeur.

En référence à la figure 2, la température $T_{aek}$ de l'air extérieur à l'entrée du condenseur 11 est mesurée une sonde de température 24 placée entre le groupe moto-ventilateur 15 et le condenseur 11.

En variante, la valeur instantanée de la température $T_{aek}$ de l'air extérieur à l'entrée du condenseur 11 est calculée par la carte électronique, à partir des valeurs instantanées de la vitesse d'avancement Va du véhicule et de la température de l'air extérieur au véhicule $T_{ext}$.

D'autres dispositifs d'estimation du fluide frigorigène, fonctionnant pour tout type de fluide frigorigène et pour tout type d'organe de refroidissement, peuvent être utilisés. Par exemple, le dispositif du brevet JP 2001-73941 peut fonctionner avec un circuit de climatisation dans lequel l'organe de refroidissement est un refroidisseur externe ("gas cooler") et le fluide frigorigène est le fluide supercritique $CO_2$ (R744).

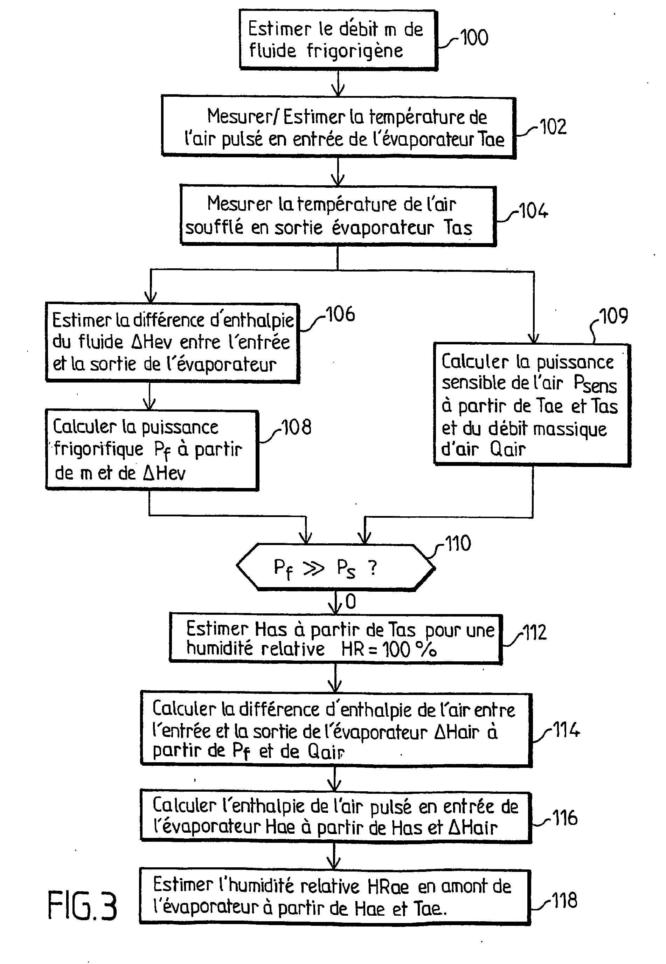

La figure 3 est un organigramme représentant les étapes mises en oeuvre par l'installation de climatisation selon l'invention pour détecter un air humide à l'entrée de l'évaporateur et estimer l'humidité relative de l'air.

A l'étape 100, le dispositif d'estimation du débit de fluide frigorigène estime le débit de fluide frigorigène m dans le circuit et fournit cette estimation à la carte électronique 401.

A l'étape 102, l'installation de climatisation estime la température $T_{ae}$ de l'air pulsé à l'entrée de l'évaporateur. Selon une caractéristique de l'invention, l'installation comprend pour cela des premiers moyens d'estimation.

Ces premiers moyens d'estimation peuvent être une sonde de température 25 placée à l'entrée de l'évaporateur. Cette sonde mesuré la valeur instantanée de la température $T_{ae}$ du flux d'air pulsé à l'entrée de l'évaporateur et fournit cette valeur à la carte électronique 401.

En variante, les premiers moyens d'estimation peuvent comprendre une sonde de température propre à fournir la valeur de la température de l'air extérieur au véhicule $T_{ext}$. La carte électronique estime alors la température de l'air à l'entrée de l'évaporateur $T_{ae}$ à partir de cette valeur et d'un facteur de correction prédéfini.

Selon une autre variante, les premiers moyens d'estimation peuvent comprendre deux sondes mesurant respectivement la température de l'air extérieur $T_{ext}$ et la température de l'habitacle $T_{hab}$ du véhicule. Ces valeurs ainsi que la position du volet d'entrée d'air de la boîte d'entrée d'air sont transmises à la carte électronique 401. Cette dernière calcule alors une estimation de la température $T_{ae}$ de l'air pulsé à l'entrée de l'évaporateur à partir de ces valeurs conformément à l'équation de l'annexe A2, où $\alpha$ désigne la proportion d'air extérieur dans la boîte d'entrée d'air. Cette valeur $\alpha$ est obtenue à partir de la position du volet d'air de la boîte d'entrée d'air.

A l'étape 104, l'installation de climatisation estime la température $T_{as}$ de l'air soufflé en sortie de l'évaporateur. Selon une autre caractéristique de l'invention, l'installation comprend pour cela des deuxièmes moyens d'estimation. En particulier, ces deuxièmes moyens d'estimation comprennent une sonde 26 de température placée en sortie de l'évaporateur. Cette sonde fournit une mesure directe de la valeur instantanée de la température $T_{as}$ de l'air soufflé en sortie de l'évaporateur.

A l'étape 106, la carte électronique calcule la différence d'enthalpie $\Delta H_{ev}$ du fluide frigorigène entre l'entrée et la sortie de l'évaporateur. Pour cela, le circuit de climatisation peut comporter des moyens d'estimation, par exemple des capteurs de pression propres à fournir une valeur relative à la haute pression HP, et une valeur relative à la pression du fluide en entrée du compresseur, dite basse pression, et fournir à la carte électronique ces valeurs pour calculer la différence d'enthalpie $\Delta H_{ev}$ du fluide frigorigène entre l'entrée et la sortie de l'évaporateur.

Dans la variante de réalisation où le dispositif d'estimation du fluide frigorigène est celui décrit dans la demande de brevet français n°01 16568, notamment pour estimer la puissance consommée par le compresseur, de tels moyens d'estimation sont déjà mis en place. La figure 2 représente des capteurs de pression 22 et 23 fournissant respectivement une mesure de la haute pression et de la basse pression. D'autres moyens de mesure peuvent être utilisés.

A l'étape 108, la carte électronique 401 calcule une estimation de la puissance frigorifique $P_f$ fournie par la climatisation à partir de la valeur du débit de fluide frigorigène m estimée à l'étape 100, et de la valeur de la différence d'enthalpie estimé à l'étape 102, selon l'équation de l'annexe A3.

Parallèlement, à l'étape 109, la carte électronique 401 calcule la puissance sensible de l'air $P_{sens}$, à partir de la valeur de la température $T_{ae}$ de l'air pulsé à l'entrée de l'évaporateur, établie à l'étape 102, et de la température $T_{as}$ de l'air soufflé à la sortie de l'évaporateur, établie à l'étape 104. La carte électronique 401 reçoit également des informations telles que la vitesse d'avancement du véhicule $V_a$, la tension d'alimentation du pulseur 20 de l'évaporateur, la température de l'air extérieur $T_{ext}$ et la position du volet d'entrée d'air $P_{volet}$ lorsque cette information est disponible. Ces dernières informations permettent de déterminer le débit d'air $Q_{air}$ dans l'évaporateur. Les équations de l'annexe A4 sont mises en oeuvre pour effectuer un tel calcul de la puissance sensible $P_{sens}$.

A l'étape 110, la carte électronique 401 compare la puissance frigorifique $P_f$ obtenue à l'étape 108 à la puissance sensible $P_{sens}$ obtenue à l'étape 109.

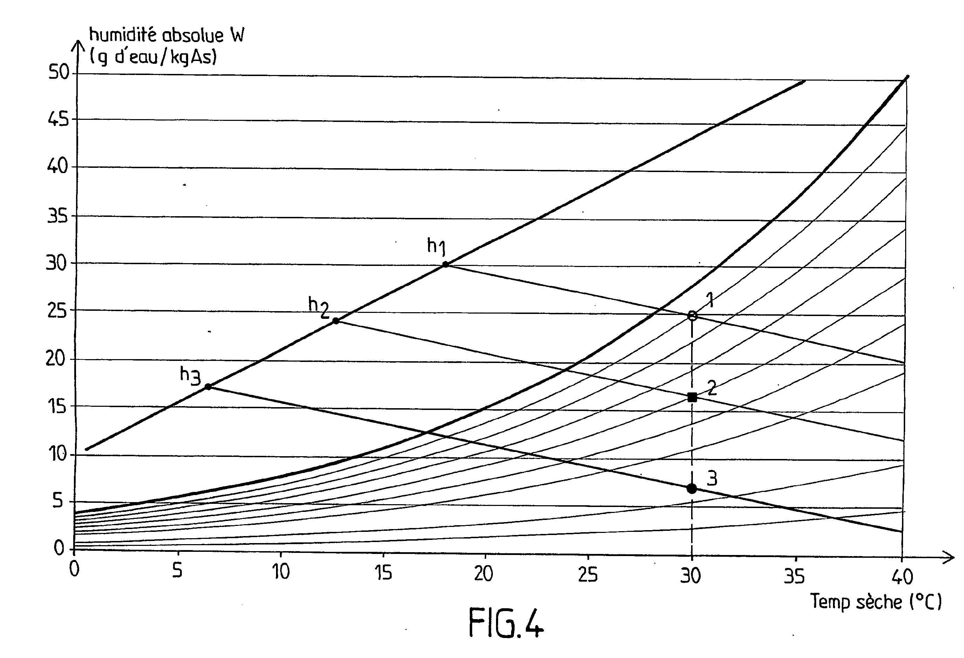

L'annexe A5 est un tableau illustrant, en relation avec le diagramme psychrométrique de l'air humide de la figure 4, les écarts entre la puissance frigorifique $P_f$ et la puissance sensible selon l'humidité relative de l'air. La figure 4 représente 3 points particuliers dont les valeurs caractéristiques sont données dans le tableau de l'annexe A5:

- le point 1 correspond à un air très humide ($\varphi$=90%) qui subit une forte condensation dans l'évaporateur. Sa puissance latente est très élevée (2570 W). L'écart entre la puissance frigorifique et la puissance sensible est donc très important;
- le point 2 correspond à un air humide $\varphi$ = 60%) qui subit une condensation moins importante dans l'évaporateur. Sa puissance latente est également élevée (1372 W). L'écart entre la puissance frigorifique et la puissance sensible est important;
- le point 3 correspond à un air sec ($\varphi$=25%) qui subit une très faible condensation dans l'évaporateur. Sa puissance latente est donc faible (5 W). L'écart entre la puissance frigorifique et la puissance sensible est faible.

Ainsi, un air très chargé en humidité engendre une puissance latente importante et dans ce cas la puissance frigorifique $P_f$ est très grande devant la puissance sensible $P_{sens}$. Inversement un air peu humide ou sec a une puissance frigorifique $P_f$ légèrement supérieure à la puissance sensible $P_{sens}$.

Par suite, la carte électronique détecte un air humide en amont de l'évaporateur lorsque la puissance frigorifique $P_f$ est très grande devant la puissance sensible $P_{sens}$. Dans ce cas, les étapes 112 à 118 sont réalisées pour estimer l'humidité relative $\varphi_{ae}$ de l'air pulsé à l'entrée de l'évaporateur. On peut alors réduire la consommation de la climatisation en fermant le volet d'entrée d'air. En effet, en fermant ce volet, on oblige le pulseur à prélever tout ou une partie de l'air à l'intérieur de l'habitacle. Comme cet air a déjà traversé l'évaporateur, il a déjà été asséché et ne contient pratiquement plus d'eau à condenser. Par suite, la puissance latente est réduite, ce qui diminue la puissance nécessaire au compresseur pour maintenir le niveau de confort calorifique dans le véhicule.

Dans le cas contraire, la carte électronique 401 détecte un air peu humide et alors la gestion du volet d'entrée d'air de la boîte d'entrée d'air est effectuer en comparant simplement la température de l'habitacle du véhicule $T_{hab}$ à la température de l'air extérieur au véhicule $T_{ext}$.

La figure 4 montre qu'autour des points de forte humidité relative (environ $\varphi > 60\%$), les lignes de même humidité relative se rapprochent, et par suite, à égale température d'air, une petite différence d'humidité relative entre deux points très humide entraîne une différence d'enthalpie d'air faible entre ces points. En revanche, autour des points de faible humidité relative, les lignes de même humidité relative sont plus espacées et par suite une petite différence d'humidité relative entre deux points peu humides entraîne une différence d'enthalpie d'air plus importante.

L'invention utilise cette faible variation de l'enthalpie d'air entre deux points très humides pour fournir une estimation de l'enthalpie de l'air soufflé $H_{as}$ en sortie de l'évaporateur. En effet, plus l'air en amont de l'évaporateur est humide, plus il y a de condensation d'eau, ce qui signifie que l'air en sortie de l'évaporateur est presque saturé d'eau. Ainsi, la détection d'un air humide à l'entrée de l'évaporateur à l'étape 114 indique que l'air en sortie de l'évaporateur est presque saturé d'eau et permet donc d'estimer l'enthalpie de l'air soufflé $H_{as}$ en sortie de l'évaporateur sur une courbe d'humidité relative supérieure ou égale à 80%. Plus on s'approche de la courbe de saturation ($\varphi = 100\%$), plus la précision de l'estimation est fine.

Ainsi, à l'étape 118, la carte électronique 401 transmet la valeur de la température $T_{as}$ de l'air soufflé en sortie de l'évaporateur, obtenue à l'étape 104, en entrée de la première table des moyens de mémoire, ainsi qu'une valeur de l'humidité relative de l'air $\varphi_{as}$ supérieure ou égale à 80% pour calculer une estimation de l'enthalpie de l'air $H_{as}$ en sortie de l'évaporateur.

A l'étape 114, la carte électronique calcule ensuite la différence d'enthalpie d'air $\Delta H_{air}$ entre l'entrée et la sortie de l'évaporateur à partir de la valeur de la puissance frigorifique $P_f$ estimée à l'étape 108 et du débit d'air dans l'évaporateur. La carte électronique 401 détermine le débit d'air $Q_{air}$ dans l'évaporateur à partir de la valeur de la vitesse d'avancement $V_a$ du véhicule, de la tension d'alimentation $V_p$ du pulseur 20 de l'évaporateur, de la température de l'air extérieur $T_{ext}$ et de la position du volet d'entrée d'air $P_{volet}$ lorsque cette information est disponible. Ces informations peuvent être fournies par le calculateur d'injection du véhicule lorsqu'il en est muni. L'équation liant le débit d'air $Q_{air}$ à ces grandeurs fait l'objet d'un abaque qui est connu lors de l'étude aérolique de l'appareil de climatisation. Les équations correspondantes pour calculer la différence d'enthalpie d'air sont données dans l'annexe A6.

A l'étape 116, la carte électronique 401 utilise la valeur de l'enthalpie de l'air $H_{as}$ en sortie de l'évaporateur, estimée à l'étape 112, et la valeur de la différence d'enthalpie d'air $\Delta H_{air}$ entre l'entrée et la sortie de l'évaporateur, calculée à l'étape 114, pour estimer l'enthalpie de l'air $H_{ae}$ à l'entrée de l'évaporateur, selon l'équation de l'annexe A7.

A l'étape 118, la carte électronique 401 transmet les valeurs de la température $T_{ae}$ et de l'enthalpie $H_{ae}$ de l'air pulsé à l'entrée de l'évaporateur, respectivement obtenues aux étapes 102 et 116, aux entrées de la première table des moyens de mémoire. La première table des moyens de mémoire fournit alors instantanément l'humidité relative $\varphi_{ae}$ de l'air en amont de l'évaporateur.

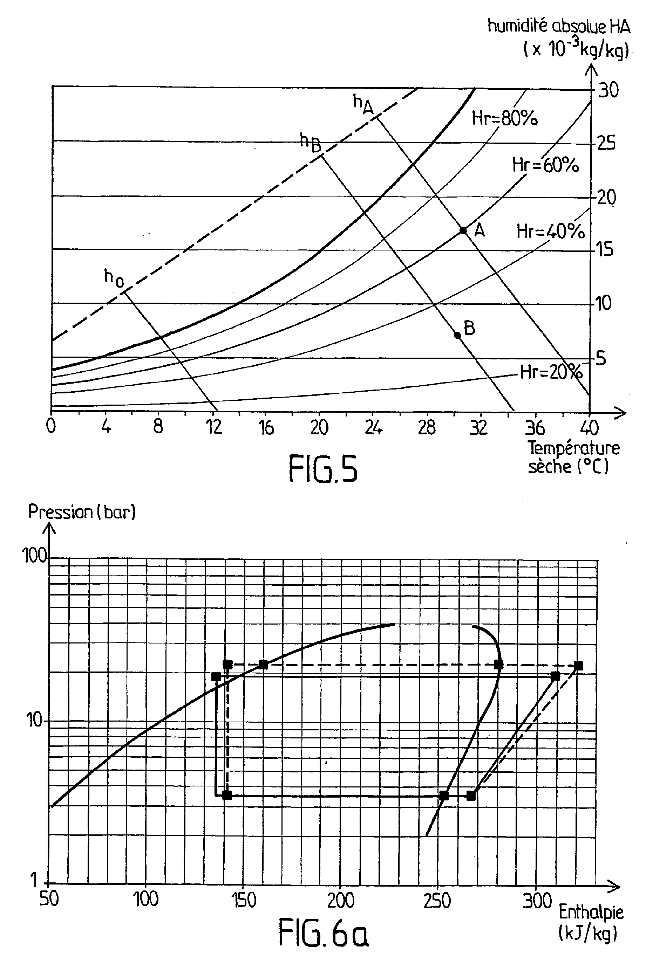

Les figures 5 et 6a montrent l'influence d'une humidité importante de l'air en amont de l'évaporateur sur la consommation de la climatisation pour le fluide frigorigène sous-critique R134a.

En référence à la figure 5, le point A représente un air humide ($\varphi = 60\%$) en entrée de l'évaporateur alors que le point B représente un air sec ($\varphi = 30\%$) en entrée de l'évaporateur.

La figure 6a représente les cycles de climatisation correspondant respectivement aux conditions du point A (courbe en pointillés) et du point B (courbe en traits pleins), dans le diagramme de Mollier, pour le fluide frigorigène sous-critique R134a. On observe qu'un air humide (point A) en entrée de l'évaporateur engendre une haute pression plus importante qu'un air sec, et par suite une puissance consommée par la climatisation plus importante.

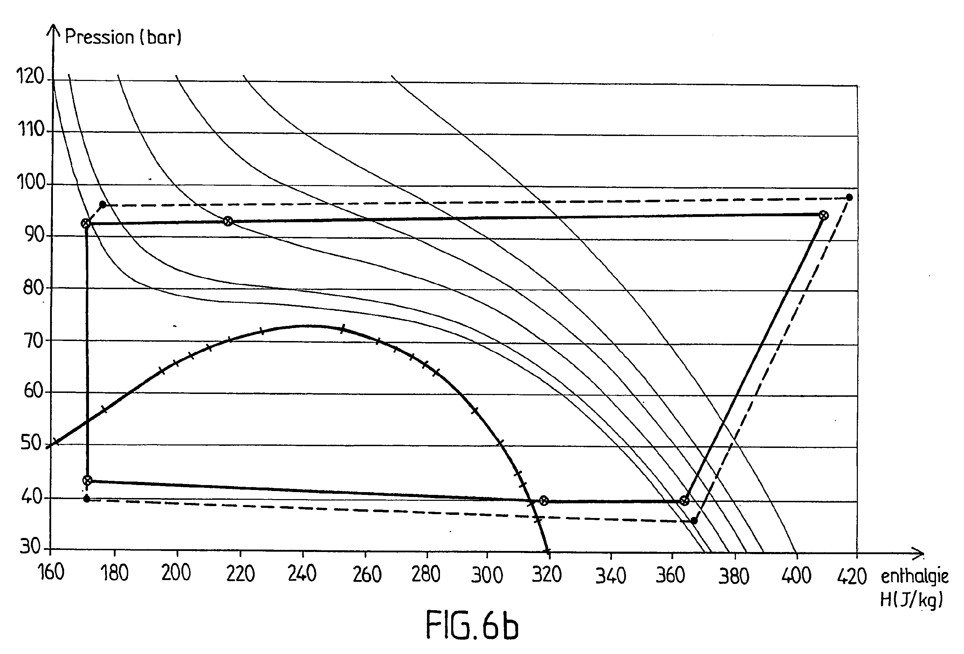

De même, la figure 6b représente les cycles de climatisation correspondant respectivement aux conditions du point A (courbe en pointillés) et du point B (courbe en traits pleins), dans le diagramme de Mollier, pour le fluide frigorigène super-critique R744 (CO2). On observe que la courbe correspondant à un air humide (en pointillés) est au dessus de la courbe correspondant à un air sec (en traits pleins) et donc qu'une humidité de l'air plus importante dans le cas d'un fluide supercritique engendre également une haute pression plus importante, et par suite une puissance consommée par la climatisation plus importante. Ceci s'explique par le fait que lorsque l'humidité augmente, le débit massique de fluide frigorigène CO2 augmente. Par suite la température en sortie du refroidisseur externe 11 ("gaz cooler") augmente aussi, engendrant ainsi une pression plus importante.

Ces différences de consommation entre un air humide en amont de l'évaporateur et un air sec en amont de l'évaporateur sont encore plus importantes lorsque la température de l'air extérieur au véhicule est élevée. Une réduction de la consommation de la climatisation peut donc être obtenue en gérant l'entrée d'air extérieur en amont de l'évaporateur et donc en ajustant la position du volet d'entrée d'air de la boîte d'entrée d'air. En particulier, il convient de recycler au maximum l'air de l'habitacle car l'air de l'habitacle est plus sec que l'air extérieur. Ceci a pour effet de réduire la charge thermique sur l'évaporateur et notamment la charge latente.

En complément, à partir de la valeur de l'enthalpie $H_{as}$ de l'air en sortie de l'évaporateur obtenue à l'étape 118 et de la valeur de la température $T_{as}$ de l'air en sortie de l'évaporateur obtenue à l'étape 104, la carte électronique peut calculer l'humidité absolue $W_{as}$ de l'air à la sortie de l'évaporateur, qui représente la quantité d'eau contenue dans l'air soufflé à l'extérieur de l'évaporateur. Pour cela, la carte électronique 401 transmet la valeur de l'enthalpie de l'air soufflé à la sortie de l'évaporateur $H_{as}$ obtenue à l'étape 118 et la valeur de la température à l'entrée de l'évaporateur $T_{as}$ en entrée de la deuxième table des moyens de mémoire, laquelle fournit instantanément en sortie la valeur de l'humidité absolue $W_{as}$ de l'air à la sortie de l'évaporateur.

Cette estimation de l'humidité absolue $W_{as}$ de l'air à la sortie de l'évaporateur permet de prévoir l'évolution de l'humidité absolue de l'habitacle dans le temps. L'équation de l'annexe A8-1 représente le bilan d'eau de l'habitacle. La masse d'air dans l'habitacle correspond à $M_{ah}$, le débit d'air soufflé à la sortie de l'évaporateur correspond à $Q_{air}$, et le débit d'eau évaporée par les passagers correspond à $M_{eau}$. Cette équation lie l'humidité absolue de l'habitacle $W_{hab}$ à l'humidité de l'air à la sortie de l'évaporateur $W_{as}$.

La quantité d'eau évaporée par un passager est en moyenne de 80g/h et est donc faible par rapport au taux de renouvellement en air neuf dans l'habitacle qui est d'environ 300 kg/h. La quantité d'eau évaporée par les passagers étant négligeable, l'équationde l'annexe A8-1 peut être résolue sous la forme donnée par l'annexe A8-2. Selon l'équation de l'annexe A8-2, il est possible de prévoir l'évolution de l'humidité absolue de l'air dans l'habitacle $W_{hab}$, à un instant donné, en fonction de l'humidité absolue de l'air en sortie de l'évaporateur $W_{as}$ à partir de la valeur de l'humidité absolue de l'air dans l'habitacle $W_{hab}(0)$ à un instant initial t=0 et du débit d'air dans l'habitacle $Q_{air}$.

Par exemple, en appliquant l'équation de l'annexe A8-2, avec un débit d'air en renouvellement Qair de 400 kg/h et une masse d'air dans l'habitacle $M_{ah}$ d'environ 7 kg, on obtient une constante de temps τ d'environ 60 secondes. On peut donc en déduire que l'humidité absolue de l'air dans l'habitacle $W_{hab}$ atteint l'humidité absolue de l'air soufflé en sortie de l'évaporateur $W_{as}$ au bout d'environ 3 minutes.

Ainsi, quelle que soit la valeur initiale de l'humidité absolue de l'air dans l'habitacle $W_{hab}(0)$, l'air soufflé en sortie de l'évaporateur impose au bout d'environ 3 minutes l'humidité dans l'habitacle.

En conséquent, l'équation de l'annexe A8-2 montre que, si l'air extérieur est humide, alors la gestion de l'humidité dans l'habitacle se fait en imposant un niveau de température en sortie de l'évaporateur.

Cette détection de l'humidité de l'air dans l'habitacle permet d'ajuster certains paramètres de contrôle, selon le risque d'embuage à faible température. Par exemple, en mode de recirculation d'air, il est possible d'ajuster la proportion d'air recyclé par rapport à la proportion d'air extérieur pour éviter l'embuage et minimiser la consommation de la climatisation.

L'équation de l'annexe A8-3 est un exemple illustrant une application du dispositif de l'invention par mise en fonctionnement optimisé de la climatisation. L'équation de l'annexe A8-3 correspond à un fonctionnement de la climatisation en air recyclé. Selon les hypothèses initiales de cet exemple, la température de l'air extérieur $T_{ext}$ est faible (environ 10°), la climatisation n'est pas en fonctionnement, le véhicule transporte 4 passagers et le volet de recirculation est fermé (par exemple pour cause de pollution). Le débit d'eau évaporée par les passagers $M_{eau}$ est donc important et l'humidité de l'habitacle varie peu ($\partial W_{hab}/\partial t$ est négligeable). L'équation de l'annexe A8-3 est donc obtenue à partir de l'équation A8-1, selon ces conditions.

Très rapidement, les vitres du véhicules deviennent embuées et il devient nécessaire de mettre la climatisation en route. Dans l'art antérieur, la climatisation souffle tardivement et à une température proche de 0°C, ce qui assèche fortement l'air. Le dispositif de l'invention permet de détecter cette situation pour mettre en route la climatisation plus tôt et à une température d'environ 5°C. Ainsi, le dispositif de l'invention consomme une puissance moins importante pour fournir cette température de 5°C que ceux de l'art antérieur pour fournir une température de 0°C.

Annexe A

A1.Estimation du débit massique de fluide frigorigène

$$m = A.(T_k - T_{aek})$$

$T_k$ = fonction(HP)

A2.Exemple d'estimation de la température de l'air en entrée de l'évaporateur ($T_{ae}$)

$$T_{ae} = (1 - \alpha).T_{hab} + \alpha. T_{ext}$$

A3. Calcul de la puissance frigorifique $P_f$

$$P_f = m \cdot \Delta H_{ev}$$

A4. Calcul de la puissance sensible $P_{sens}$

$$P_{sens} = K.Q_{air} \cdot (T_{ae}-T_{as})$$

$$Q_{air} = f(V_p; T_{ext}, V_a; P_{volet})$$

A5. Points caractéristiques du diagramme de l'air humide

|  | température sèche (°C) | humidité relative (%) | Puissance frigorifique (W) | Puissance sensible (W) | Puissance latente (W) |
|---|---|---|---|---|---|
| Point 1 | 30 | 90 | 3800 | 1222 | 2570 |
| Point 2 | 30 | 60 | 2594 | 1222 | 1372 |
| Point 3 | 30 | 25 | 1227 | 1222 | 5 |

A6. Calcul de la différence d'enthalpie de l'air en amont de l'évaporateur

$$\Delta H_{air} = P_f / Q_{air}$$

$$Q_{air} = f(V_p; T_{ext}, V_a; P_{volet})$$

A7. Calcul de l'enthalpie de l'air en amont de l'évaporateur

$$H_{ae} = H_{as} - \Delta H_{air}$$

A8. Estimation de l'humidité absolue de l'air dans l'habitacle

A8-1-Bilan d'eau dans l'habitacle

$$M_{ah} \times \frac{\partial Whab}{\partial t} = Q_{air} \cdot (W_{as} - W_{hab}) + M_{eau}$$

A8-2- Forme résolue du bilan d'eau

$$W_{hab}(t) = W_{hab}(t=0) + (W_{as}(t) - W_{hab}(t=0)) \cdot (1 - \exp(-t/\tau))$$

$$\tau = M_{ah}/Q_{air}$$

A8-3- Forme résolue du bilan d'eau

$$W_{hab}(t) = W_{as}(t) + M_{eau}/Q_{air}$$

**Revendications**

1. Installation de climatisation pour véhicule à moteur munie d'un circuit de fluide frigorigène comprenant un compresseur (14), un organe de refroidissement (11), un organe de détente (12) et un évaporateur (13), ce dernier recevant en entrée un flux d'air (18) provenant d'un pulseur (20) pour produire en sortie un flux d'air climatisé (21), l'installation comportant un dispositif électronique (401) destiné à interagir avec le circuit de fluide frigorigène (10), comprenant

   - des premiers moyens d'estimation propres à fournir une valeur relative à la température de l'air à l'entrée de l'évaporateur ($T_{ae}$),
   - des deuxièmes moyens d'estimation propres à fournir une valeur relative à la température de l'air à la sortie de l'évaporateur ($T_{as}$),

   **caractérisée en ce qu'**elle comprend :

   - un dispositif d'estimation du débit massique (m) du fluide frigorigène dans le circuit,

   le dispositif électronique de contrôle étant apte à détecter un air humide à l'entrée de l'évaporateur à partir de la valeur fournie par le dispositif d'estimation du débit massique (m) du fluide frigorigène, et des valeurs fournies par les premier et les deuxièmes moyens d'estimation ($T_{ae}$, $T_{as}$).

2. Installation de climatisation selon la revendication 1, **caractérisée en ce que** le dispositif électronique de contrôle est apte à réagir à la détection d'un air humide à l'entrée de l'évaporateur en estimant l'humidité relative de l'air à l'entrée de l'évaporateur ($\varphi_{ae}$) à partir de la valeur fournie par le dispositif d'estimation du débit massique (m) du fluide frigorigène et des valeurs fournies par les premiers et les deuxièmes moyens d'estimation ($T_{ae}$, $T'_{as}$).

3. Installation de climatisation selon l'une des revendications précédentes, **caractérisée en ce qu'**elle est agencée pour fournir une estimation de la puissance frigorifique ($P_f$) et une estimation de la puissance sensible de l'air ($P_{sens}$) dans l'évaporateur et **en ce que** le dispositif électronique de contrôle (401) est capable de détecter un air humide à l'entrée de l'évaporateur en comparant ladite estimation de la puissance frigorifique ($P_f$) avec ladite estimation de la puissance sensible de l'air ($P_{sens}$).

4. Installation de climatisation selon la revendication 3, **caractérisée en ce que** le dispositif électronique de contrôle (401) est apte à estimer la puissance frigorifique ($P_f$) à partir de la valeur de la différence d'enthalpie du fluide frigorigène entre l'entrée et la sortie de l'évaporateur ($\Delta H_{ev}$) et de la valeur fournie par le dispositif d'estimation du débit massique du fluide frigorigène (m).

5. Installation de climatisation selon l'une des revendications précédentes, **caractérisé en ce qu'**elle comporte en outre des moyens d'estimation propres à fournir :

   - une valeur relative à la pression du fluide en sortie du compresseur et
   - une valeur relative à la pression du fluide en entrée du compresseur,

   le dispositif électronique étant apte à calculer la différence d'enthalpie du fluide frigorigène entre l'entrée et la sortie de l'évaporateur ($\Delta H_{ev}$) à partir des valeurs fournies par ces dits moyens d'estimation.

6. Installation de climatisation selon l'une des revendications 3 à 5, **caractérisée en ce que** le dispositif électronique de contrôle (401) est apte à estimer la puissance sensible de l'air ($P_{sens}$) dans l'évaporateur à partir des valeurs fournies par les premiers et deuxièmes moyens d'estimation ($T_{ae}$, $T_{as}$) et de la valeur du débit massique d'air dans l'évaporateur ($Q_{air}$).

**7.** Installation de climatisation selon la revendication 6, **caractérisée en ce qu'**elle comprend une sonde de température propre à fournir la température de l'air extérieur au véhicule ($T_{ext}$) et **en ce que** le dispositif électronique de contrôle (401) est apte à estimer la valeur du débit massique d'air dans l'évaporateur ($Q_{air}$) à partir de la position du pulseur, de la vitesse d'avancement du véhicule ($V_a$) et de la température de l'air extérieur au véhicule ($T_{ext}$).

**8.** Installation de climatisation selon l'une des revendications précédentes, **caractérisée en ce que** l'installation comprend en outre des moyens de mémoire ayant une première table à deux entrées et à une sortie, cette table étant remplie en fonction de données préalables sur la relation entre l'humidité relative de l'air ($\varphi$), la température de l'air et l'enthalpie de l'air.

**9.** Installation de climatisation selon la revendication 8, **caractérisée en ce que** la première table est apte à fournir une estimation de l'enthalpie de l'air à la sortie de l'évaporateur ($H_{as}$) à partir de la valeur fournie par les deuxièmes moyens d'estimation ($T_{as}$) et d'une valeur d'humidité relative de l'air en sortie de l'évaporateur supérieure ou égale à 80% ($\varphi_{as}$).

**10.** Installation de climatisation selon l'une des revendications 2 à 7, **caractérisée en ce que** le dispositif électronique de contrôle est apte à mettre en oeuvre la résolution d'une équation liant l'enthalpie de l'air, l'humidité relative de l'air et la température de l'air, pour calculer une estimation de l'enthalpie de l'air à la sortie de l'évaporateur ($H_{as}$) à partir de la valeur fournie par les deuxièmes moyens d'estimation ($T_{as}$) et d'une valeur d'humidité relative de l'air en sortie de l'évaporateur supérieure ou égale à 80% ($\varphi_{as}$).

**11.** Installation de climatisation selon l'une des revendications 9 et 10, **caractérisée en ce que** le dispositif électronique de contrôle est apte à fournir une estimation de l'enthalpie de l'air à l'entrée de l'évaporateur ($H_{ae}$) à partir de la valeur de l'enthalpie de l'air à la sortie de l'évaporateur ($H_{as}$) et de la valeur de la puissance frigorifique (Pf).

**12.** Installation de climatisation selon la revendication 11 prise en combinaison avec la revendication 9, **caractérisée en ce que** la première table est propre à fournir instantanément une estimation de l'humidité relative de l'air à l'entrée de l'évaporateur ($\varphi_{ae}$) à partir de l'estimation de l'enthalpie de l'air à l'entrée de l'évaporateur ($H_{ae}$) et de la valeur fournie par les premiers moyens d'estimation ($T_{ae}$).

**13.** Installation de climatisation selon la revendication 11 prise en combinaison avec la revendication 10, **caractérisée en ce que** le dispositif électronique de contrôle est apte à mettre en oeuvre la résolution d'une équation pour estimer l'humidité relative de l'air à l'entrée de l'évaporateur ($\varphi_{ae}$) à partir de l'estimation de l'enthalpie de l'air à l'entrée de l'évaporateur ($H_{ae}$) et de la valeur fournie par les premiers moyens d'estimation ($T_{ae}$).

**14.** Installation de climatisation selon l'une des revendications précédentes prise en combinaison avec la revendication 9, **caractérisée en ce que** les moyens de mémoire comprennent une deuxième table à deux entrées et à une sortie, cette table étant remplie en fonction de données préalables sur la relation entre l'humidité absolue de l'air (W), la température de l'air et l'enthalpie de l'air et **en ce que** la deuxième table est apte à fournir la valeur de l'humidité absolue de l'air ($W_{as}$) à la sortie de l'évaporateur à partir de la valeur de l'enthalpie de l'air soufflé à la sortie de l'évaporateur ($H_{as}$) fournie par la première table et de la valeur de la température à l'entrée de l'évaporateur ($T_{as}$).

**15.** Installation de climatisation selon l'une des revendications 1 à 13 prise en combinaison avec la revendication 10, **caractérisée en ce que** le dispositif électronique de contrôle est apte à mettre en oeuvre la résolution d'une équation liant l'humidité absolue de l'air, la température de l'air et l'enthalpie de l'air, pour calculer une estimation de la valeur de l'humidité absolue de l'air ($W_{as}$) à la sortie de l'évaporateur à partir de la valeur de l'enthalpie de l'air soufflé à la sortie de l'évaporateur ($H_{as}$) et de la valeur de la température à l'entrée de l'évaporateur ($T_{as}$).

**16.** Installation de climatisation selon l'une des revendications 14 et 15, **caractérisée en ce que** le dispositif électronique de contrôle est apte à mettre en oeuvre la résolution d'une équation liant la valeur de l'humidité absolue de l'air dans l'habitacle ($W_{as}$) et la valeur de l'humidité absolue de l'air soufflé à la sortie de l'évaporateur à un instant donné pour calculer l'humidité absolue de l'air dans l'habitacle ($W_{hab}$) à partir de la valeur de l'humidité absolue de l'air soufflé à la sortie de l'évaporateur ($W_{as}$).

**17.** Installation de climatisation selon l'une des revendications précédentes, **caractérisée en ce que** l'organe de refroidissement est un condenseur et **en ce que** le dispositif d'estimation du débit massique (m) du fluide frigorigène comprend des moyens d'estimation propres à fournir :

- une valeur relative à la pression du fluide frigorigène en sortie du compresseur (HP), et
- une valeur relative à la température du flux d'air extérieur à l'entrée du condenseur ($T_{aek}$),

et **en ce que** le dispositif électronique de contrôle (401) est apte à estimer la valeur du débit massique du fluide frigorigène (m) à partir des valeurs fournies par lesdits moyens d'estimation.

18. Installation de climatisation selon l'une des revendications précédentes, **caractérisée en ce que** les premiers moyens d'estimation comprennent une sonde de température (25) propre à fournir la valeur de la température de l'air à l'entrée de l'évaporateur ($T_{ae}$), placée en amont de l'évaporateur.

19. Installation de climatisation selon l'une des revendications 1 à 17, **caractérisée en ce que** les premiers moyens d'estimation comprennent une sonde de température propre à fournir la valeur de la température de l'air à l'extérieur du véhicule ($T_{ext}$) et **en ce que** le dispositif électronique de contrôle (401) est apte à estimer la température de l'air à l'entrée de l'évaporateur ($T_{ae}$) à partir de cette valeur et d'un facteur de correction prédéfini.

20. Installation de climatisation selon l'une des revendications 1 à 17, **caractérisée en ce que** l'installation comporte un volet d'entrée d'air en amont de l'évaporateur à position variable pour permettre le mélange d'air extérieur au véhicule et d'air repris dans l'habitacle du véhicule, et **en ce que** les premiers moyens d'estimation comprennent deux sondes de température propres à fournir une mesure de la température du flux d'air extérieur au véhicule ($T_{ext}$) et une mesure de la température de l'habitacle ($T_{hab}$), le dispositif électronique de contrôle (401) étant apte à estimer la température de l'air à l'entrée de l'évaporateur ($T_{ae}$) à partir de ces valeurs et de la position du volet d'entrée d'air.

21. Installation de climatisation selon l'une des revendications précédentes, **caractérisée en ce que** les deuxièmes moyens d'estimation comprennent une sonde de température (26), placée à la sortie de l'évaporateur, propre à fournir la valeur de la température de l'air en sortie de l'évaporateur ($T_{as}$).

22. Installation de climatisation selon l'une des revendications 1 à 20, **caractérisée en ce que** l'installation comprend une bouche d'aération reliée à l'évaporateur par un conduit d'aération propre à recevoir le flux d'air climatisé produit en sortie de l'évaporateur, et **en ce que** les deuxièmes moyens d'estimation comprennent une sonde de température placée sur ledit conduit d'aération, le dispositif électronique de contrôle (401) étant apte à estimer la température de l'air en sortie de l'évaporateur ($T_{as}$) à partir de la température mesurée par ladite sonde de température et d'un facteur de correction prédéfini.

## Claims

1. Air conditioning unit for a motor vehicle equipped with a refrigerant fluid circuit including a compressor (14), a cooling member (11) a depressurisation member (12) and an evaporator (13), which receives at the inlet a flow of air (18) coming from a blower (20) so as to produce, at the outlet, a flow of air conditioned air (21), which unit comprises an electronic device (401) intended to interact with the refrigerant fluid circuit (10), including

   - first estimating means for supplying a value concerning the air temperature at the evaporator inlet ($T_{ae}$),
   - second estimating means for supplying a value concerning the air temperature at the evaporator outlet ($T_{as}$),

   **characterised in that** it includes;

   - a device for estimating the mass flow rate (m) of a refrigerant fluid in the circuit,

   which electronic device is capable of detecting humid air at the inlet of the evaporator on the basis of the value supplied by the device for estimating the mass flow rate (m) of the refrigerant fluid, and the values supplied by the first and second estimating means ($T_{ae}$, $T_{as}$).

2. Air conditioning unit according to claim 1, **characterised in that** the electronic control device is capable of reacting to the detection of humid air at the evaporator inlet by estimating the relative humidity of the air at the evaporator inlet ($\varphi_{ae}$) on the basis of the value supplied by the device for estimating the mass flow rate (m) of the refrigerant fluid, and the values supplied by the first and second estimating means (Tae, $T_{as}$).

3. Air conditioning unit according to one of the previous claims, **characterised in that** it is arranged to supply an estimation of the refrigerating capacity ($P_f$) and an estimation of the sensitive capacity of air ($P_{sens}$) in the evaporator, and **in that** the electronic control device (401) is capable of detecting humid air at the evaporator inlet by comparing said estimation of the refrigerating capacity ($P_f$) with said estimation of the sensitive capacity of the air ($P_{sens}$).

4. Air conditioning unit according to one of the previous claims, **characterised in that** the electronic control device (401) is capable of estimating the refrigerating capacity ($P_f$) on the basis of the value of the difference in enthalpy of the refrigerant fluid between the inlet and the outlet of the evaporator ($\Delta H_{ev}$) and the value supplied by the device for estimating the mass flow rate (m) of the refrigerant fluid.

5. Air conditioning unit according to one of the previous claims, **characterised in that** it also comprises estimating means for supplying:

   - a value concerning the pressure of the fluid at the compressor outlet, and
   - a value concerning the pressure of the fluid at the compressor inlet

   which electronic device is capable of calculating the difference in enthalpy of the refrigerant fluid between the inlet and the outlet of the evaporator ($\Delta H_{ev}$) on the basis of the values supplied by said estimating means.

6. Air conditioning unit according to one of claims 3 to 5, **characterised in that** the electronic control device (401) is capable of estimating the sensitive capacity of air ($P_{sens}$) in the evaporator on the basis of the values supplied by the first and second estimating means ($T_{ae}$, $T_{as}$) and the value of the mass flow rate of air in the evaporator ($Q_{air}$).

7. Air conditioning unit according to claim 6, **characterised in that** it includes a temperature detector for supplying the temperature of the air outside of the vehicle ($T_{ext}$) and **in that** the electronic control device (401) is capable of estimating the mass flow rate of air in the evaporator ($Q_{air}$) on the basis of the position of the blower, the forward speed of the vehicle ($V_a$) and the temperature of the air outside of the vehicle ($T_{ext}$).

8. Air conditioning unit according to one of the previous claims, **characterised in that** the unit also includes storage means having a first table with two inlets and an outlet, which table is filled according to the previous data on the relationship between the relative humidity of the air ($\varphi$), the temperature of the air and the enthalpy of the air.

9. Air conditioning unit according to claim 8, **characterised in that** the first table is capable of supplying an estimation of the enthalpy of the air at the evaporator outlet (Has) on the basis of the value supplied by the second estimating means ($T_{as}$) and a value of the relative humidity of the air at the evaporator outlet greater than or equal to 80 % ($\varphi_{as}$).

10. Air conditioning unit according to one of claims 2 to 7, **characterised in that** the electronic control device is capable of implementing the resolution of an equation linking the enthalpy of the air, the relative humidity of the air and the temperature of the air so as to calculate an estimation of the enthalpy of the air at the evaporator outlet ($H_{as}$) on the basis of the value supplied by the second estimating means ($T_{as}$) and a value of the relative humidity of the air at the evaporator outlet greater than or equal to 80 % ($\varphi_{as}$).

11. Air conditioning unit according to one of claims 9 or 10, **characterised in that** the electronic control device is capable of supplying an estimation of the enthalpy of the air at the evaporator inlet ($H_{ae}$) on the basis of the value of the enthalpy of the air at the evaporator outlet ($H_{as}$) and the value of the refrigerating capacity (Pf).

12. Air conditioning unit according to claim 11 in combination with claim 9, **characterised in that** the first table is suitable for instantaneously supplying an estimation of the relative humidity of the air at the evaporator inlet ($\varphi_{ae}$) on the basis of the estimation of the enthalpy of the air at the evaporator inlet ($H_{ae}$) and the value supplied by the first estimating means ($T_{ae}$).

13. Air conditioning unit according to claim 11 in combination with claim 10, **characterised in that** the electronic control device is capable of implementing the resolution of an equation for estimating the relative humidity of the air at the evaporator inlet ($\varphi_{ae}$) on the basis of the estimation of the enthalpy of the air at the evaporator inlet ($H_{ae}$) and the value supplied by the first estimating means ($T_{ae}$).

14. Air conditioning unit according to one of the previous claims in combination with claim 9, **characterised in that** the storage means include a second table with two inlets and one outlet, which table is filled according to the previous data on the relationship between the absolute humidity of the air (W), the temperature of the air and the enthalpy of the air and **in that** the second table is capable of supplying the value of the absolute humidity of the air ($W_{as}$) at the evaporator outlet on the basis of the value of the enthalpy of the air blown at the evaporator outlet ($H_{as}$) supplied by the first table and the value of the temperature at the evaporator inlet ($T_{as}$).

15. Air conditioning unit according to one of claims 1 to 13 in combination with claim 10, **characterised in that** the electronic control device is capable of implementing the resolution of an equation linking the absolute humidity of the air, the temperature of the air and the enthalpy of the air, so as to calculate an estimation of the absolute humidity the air ($W_{as}$) at the evaporator outlet on the basis of the value of the enthalpy of the air blown at the evaporator outlet ($H_{as}$) and the value of the temperature at the evaporator inlet ($T_{as}$).

16. Air conditioning unit according to one of claims 14 or 15, **characterised in that** the electronic control device is capable of implementing the resolution of an equation linking the value of the absolute humidity of air in the car interior ($W_{as}$) and the value of the absolute humidity of the air blown at the evaporator outlet at a given time in order to calculate the absolute humidity of the air in the car interior ($W_{hab}$) on the basis of the value of the absolute humidity of the air blown at the evaporator outlet ($W_{as}$).

17. Air conditioning unit according to one of the previous claims, **characterised in that** the cooling member is a condenser and **in that** the device for estimating the mass flow rate (m) of the refrigerant fluid includes estimating means for supplying:

- a value concerning the pressure of the refrigerant fluid at the compressor outlet (HP), and
- a value concerning the temperature of the air flow outside of the condenser inlet ($T_{aek}$),

and **in that** the electronic control device (401) is capable of estimating the value of the mass flow rate of the refrigerant fluid (m) on the basis of the values supplied by said estimating means.

18. Air conditioning unit according to one of the previous claims, **characterised in that** the first estimating means include a temperature detector (25) for supplying the value of the temperature of the air at the evaporator inlet ($T_{ae}$), placed upstream of the evaporator.

19. Air conditioning unit according to one of claims 1 to 17, **characterised in that** the first estimating means include a temperature detector for supplying the value of the air temperature outside of the vehicle ($T_{ext}$) and **in that** the electronic control device (401) is capable of estimating the temperature of the air at the evaporator inlet ($T_{ae}$) on the basis of this value and a predetermined correction factor.

20. Air conditioning unit according to one of claims 1 to 17, **characterised in that** the unit comprises an air inlet valve upstream of the evaporator in a variable position so as to enable the mixture of air outside of the vehicle and air in the car interior, and **in that** the first estimating means include two temperature detectors for supplying a measurement of the temperature of the air flow outside of the vehicle ($T_{ext}$) and a measurement of the temperature of the car interior ($T_{hab}$), which electronic control device (401) is capable of estimating the temperature of the air at the evaporator inlet ($T_{ae}$) on the basis of these values and the position of the air inlet valve.

21. Air conditioning unit according to one of the previous claims, **characterised in that** the second estimating means include a temperature detector (26) placed at the evaporator outlet, suitable for supplying the value of the temperature of the air at the evaporator outlet ($T_{as}$).

22. Air conditioning unit according to one of claims 1 to 20, **characterised in that** the unit includes an aeration inlet connected to the evaporator by an aeration canal for receiving the flow of air conditioned air produced at the evaporator outlet, and **in that** the second estimating means include a temperature detector placed on said aeration canal, wherein the electronic control device (401) is capable of estimating the temperature of the air at the evaporator outlet ($T_{as}$) on the basis of the temperature measured by said temperature detector and a predetermined correction factor.

**Patentansprüche**

1. Klimaanlage für ein Motorfahrzeug, ausgerüstet mit einem Kühlmittelkreislauf, der einen Verdichter (14), ein Kühlorgan (11), ein Druckminderungsorgan (12) und ein Verdampfer (13), wobei letzterer am Eingang einen Luftfluss (18) aufnimmt, der aus einem Gebläse (20) stammt, um am Ausgang einen klimatisierten Luftfluss (21) zu erzeugen, wobei die Anlage eine elektronische Vorrichtung (401) umfasst, die für die Wechselwirkung mit dem Kühlmittelkreislauf (10) bestimmt ist,

**dadurch gekennzeichnet, dass** sie Folgendes umfasst

- erste Bewertungsmittel, die einen Wert in Bezug auf die Temperatur der Luft am Eingang des Verdampfers ($T_{ae}$) liefern können,
- zweite Bewertungsmittel, die einen Wert in Bezug auf die Temperatur der Luft am Ausgang des Verdampfers ($T_{as}$) liefern können
- eine Vorrichtung zur Bewertung des Massendurchsatzes (m) des Kühlmittels in dem Kreislauf,

wobei das elektronische Steuergerät feuchte Luft am Eingang des Verdampfers feststellen kann, über den Wert, den die Vorrichtung zur Bewertung des Massendurchsatzes (m) des Kühlmittels liefert und über Werte, die von den ersten und den zweiten Bewertungsmitteln ($T_{ae}$, $T_{as}$) geliefert werden.

2.  Klimaanlage nach Anspruch 1, **dadurch gekennzeichnet, dass** das elektronische Steuergerät auf die Feststellung von feuchter Luft am Eingang des Verdampfers reagieren kann, indem es die relative Feuchte der Luft am Eingang des Verdampfers ($\varphi_{ae}$) bewerten kann, über den Wert, der von der Vorrichtung zur Bewertung des Massendurchsatzes (m) des Kühlmittels geliefert wird und der Werte, die von den ersten und den zweiten Bewertungsmitteln ($T_{ae}$, $T_{as}$) geliefert werden.

3.  Klimaanlage nach einem der vorstehenden Ansprüche, **dadurch gekennzeichnet, dass** sie angeordnet ist, um eine Bewertung der Kühlleistung ($P_f$) zu liefern und eine Bewertung der sensiblen Leistung der Luft ($P_{sens}$) in dem Verdampfer und **dadurch, dass** das elektronische Steuergerät (401) in der Lage ist, feuchte Luft am Eingang des Verdampfers festzustellen, durch Vergleichen der besagten Bewertung der Kühlleistung ($P_f$) mit der besagten Bewertung der sensiblen Leistung der Luft ($P_{sens}$).

4.  Klimaanlage nach Anspruch 3, **dadurch gekennzeichnet, dass** das elektronische Steuergerät (401) in der Lage ist, eine Kühlleistung ($P_f$) zu bewerten, über den Wert des Unterschiedes der Enthalpie des Kühlmittels zwischen dem Eingang und dem Ausgang des Verdampfers ($\Delta H_{ev}$) und dem Wert, den die Vorrichtung zur Bewertung des Massendurchsatzes des Kühlmittels (m) liefert.

5.  Klimaanlage nach einem der vorstehenden Ansprüche, **dadurch gekennzeichnet, dass** sie außerdem Bewertungsmittel umfasst, die Folgendes liefern können:

- einen Wert in Bezug auf den Druck des Kühlmittels am Ausgang des Verdichters und
- einen Wert in Bezug auf den Druck des Kühlmittels am Eingang des Verdichters,

wobei die elektronische Vorrichtung in der Lage ist, den Unterschied der Enthalpie des Kühlmittels zwischen dem Eingang und dem Ausgang des Verdichters ($\Delta H_{ev}$) zu berechnen, über Werte, die von diesen besagten Bewertungsmitteln geliefert werden.

6.  Klimaanlage nach einem der Ansprüche 3 bis 5, **dadurch gekennzeichnet, dass** das elektronische Steuergerät (401) in der Lage ist, die sensible Leistung der Luft ($P_{sens}$) in dem Verdampfer zu messen, über Werte, die von den ersten und den zweiten Bewertungsmitteln ($T_{ae}$, $T_{as}$) und dem Wert des Massendurchsatzes, der Luft in dem Verdampfer ($Q_{air}$) geliefert werden.

7.  Klimaanlage nach Anspruch 6, **dadurch gekennzeichnet, dass** sie einen Temperaturfühler umfasst, der die Temperatur der Außenluft des Fahrzeugs ($T_{ext}$) liefern kann und **dadurch, dass** das elektronische Steuergerät (401) in der Lage ist, den Wert des Massedurchsatzes in dem Verdampfer ($Q_{air}$) zu bewerten, über die Position des Gebläses, der Fahrgeschwindigkeit des Fahrzeugs ($V_a$) und der Temperatur der Außenluft des Fahrzeugs ($T_{ext}$).

8.  Klimaanlage nach einem der vorstehenden Ansprüche, **dadurch gekennzeichnet, dass** die Anlage außerdem Speichermittel umfasst, die eine erste Tabelle mit zwei Eingängen und mit einem Ausgang umfassen, wobei diese Tabelle gefüllt ist, in Zusammenhang mit den vorherigen Daten zu der Beziehung zwischen der relativen Feuchte der Luft ($\varphi$), der Temperatur der Luft und der Enthalpie der Luft.

9. Klimaanlage nach Anspruch 8, **dadurch gekennzeichnet, dass** die erste Tabelle in der Lage ist, eine Bewertung der Enthalpie der Luft am Ausgang des Verdampfers ($H_{as}$) zu liefern, über den Wert, den die zweiten Bewertungsmittel ($T_{as}$) liefern und über einen Wert der relativen Feuchte der Luft am Ausgang des Verdampfers höher oder gleich 80 % ($\varphi_{as}$).

10. Klimaanlage nach einem der Ansprüche 2 bis 7, **dadurch gekennzeichnet, dass** das elektronische Steuergerät in der Lage ist, die Auflösung einer Gleichung anzuwenden, die die Enthalpie der Luft, die relative Feuchte der Luft und die Temperatur der Luft verbindet, um eine Bewertung der Enthalpie der Luft am Ausgang des Verdampfers ($H_{as}$) zu berechnen, über einen Wert, der von den zweiten Bewertungsmitteln ($T_{as}$) geliefert wird und einen Wert der relativen Feuchte der Luft am Ausgang des Verdampfers höher oder gleich 80 % ($\varphi_{as}$).

11. Klimaanlage nach einem der Ansprüche 9 und 10, **dadurch gekennzeichnet, dass** das elektronische Steuergerät in der Lage ist, eine Bewertung der Enthalpie der Luft am Eingang des Verdampfers ($H_{ae}$) zu liefern, über den Wert der Enthalpie der Luft am Ausgang des Verdampfers ($H_{as}$) und den Wert der Kühlleistung (Pf).

12. Klimaanlage nach Anspruch 11, in Verbindung mit Anspruch 9, **dadurch gekennzeichnet, dass** die erste Tabelle in der Lage ist, sofort eine Bewertung der relativen Feuchte der Luft am Eingang des Verdampfers ($\varphi_{ae}$) zu liefern, über die Bewertung der Enthalpie der Luft am Eingang des Verdampfers ($H_{ae}$) und dem Wert, der von den ersten Bewertungsmitteln ($T_{ae}$) geliefert wird.

13. Klimaanlage nach Anspruch 11, in Verbindung mit Anspruch 10, **dadurch gekennzeichnet, dass** das elektronische Steuergerät in der Lage ist, die Auflösung einer Gleichung anzuwenden, zur Bewertung der relativen Feuchte der Luft am Eingang des Verdampfers ($\varphi_{as}$), über die Bewertung der Enthalpie der Luft am Eingang des Verdampfers ($H_{ae}$) und den Wert, der von den ersten Bewertungsmitteln ($T_{ae}$) geliefert wird.

14. Klimaanlage nach einem der vorstehenden Ansprüche, in Verbindung mit Anspruch 9, **dadurch gekennzeichnet, dass** die Speichermittel eine zweite Tabelle mit zwei Eingängen und einem Ausgang umfassen, wobei diese Tabelle gefüllt ist, in Zusammenhang mit den vorherigen Daten zu der Beziehung zwischen der absoluten Feuchte der Luft (W), der Temperatur der Luft und der Enthalpie der Luft und **dadurch gekennzeichnet, dass** die zweite Tabelle in der Lage ist, den Wert der absoluten Feuchte der Luft ($W_{as}$) am Ausgang des Verdampfers ($H_{as}$), der von der ersten Tabelle geliefert wird und über den Wert der Temperatur am Eingang des Verdampfers ($T_{as}$).

15. Klimaanlage nach einem der Ansprüche 1 bis 13, in Verbindung mit Anspruch 10, **dadurch gekennzeichnet, dass** das elektronische Steuergerät in der Lage ist, die Auflösung einer Gleichung anzuwenden, die die absolute Feuchte der Luft, die Temperatur der Luft und die Enthalpie der Luft verbindet, um eine Bewertung des Wertes der absoluten Feuchte der Luft ($W_{as}$) am Ausgang des Verdampfers zu berechnen, über den Wert der Enthalpie der Luft, die am Ausgang des Verdampfers ($H_{as}$) durchgeblasen wird und über den Wert der Temperatur am Eingang des Verdampfers ($T_{as}$).

16. Klimaanlage nach einem der Ansprüche 14 und 15, **dadurch gekennzeichnet, dass** das elektronische Steuergerät in der Lage ist, die Auflösung einer Gleichung anzuwenden, die den Wert der absoluten Feuchte der Luft in dem Fahrgastraum ($W_{as}$) und den Wert der absoluten Feuchte der Luft verbindet, die am Ausgang des Verdampfers durchgeblasen wird, in einem vorgegebenen Moment, um die absolute Feuchte der Luft in dem Fahrgastraum ($W_{hab}$) zu berechnen, über den Wert der absoluten Feuchte der Luft, die am Ausgang des Verdampfers ($W_{as}$) durchgeblasen wird.

17. Klimaanlage nach einem der vorstehenden Ansprüche, **dadurch gekennzeichnet, dass** das Kühlorgan ein Verflüssiger ist und **dadurch, dass** die Bewertungseinrichtung des Massedurchsatzes (m) des Kühlmittels Bewertungsmittel umfasst, die Folgendes liefern können:

- einen Wert in Bezug auf den Druck des Kühlmittels am Ausgang des Verdichters (HP) und
- einen Wert in Bezug auf die Temperatur des externen Luftflusses am Eingang des Verflüssigers ($T_{aek}$), und **dadurch gekennzeichnet, dass** das elektronische Steuergerät (401) in der Lage ist, den Wert des Massedurchsatzes des Kühlmittels (m) zu bewerten, über Werte, die durch die besagten Bewertungsmittel geliefert werden.

**18.** Klimaanlage nach einem der vorstehenden Ansprüche, **dadurch gekennzeichnet, dass** die ersten Bewertungsmittel einen Temperaturfühler (25) umfassen, der in der Lage ist, den Wert der Temperatur der Luft am Eingang des Verdampfers ($T_{ae}$) zu liefern, der sich oberhalb des Verdampfers befindet.

**19.** Klimaanlage nach einem der Ansprüche 1 bis 17, **dadurch gekennzeichnet, dass** die ersten Bewertungsmittel einen Temperaturfühler umfassen, der den Wert der Temperatur der Luft außerhalb des Fahrzeugs ($T_{ext}$) liefern kann und **dadurch, dass** das elektronische Steuergerät (401) in der Lage ist, die Temperatur der Luft am Eingang des Verdampfers ($T_{ae}$) zu bewerten, über diesen Wert und über einen vorher festgelegten Korrekturfaktor.

**20.** Klimaanlage nach einem der Ansprüche 1 bis 17, **dadurch gekennzeichnet, dass** die Anlage eine Lufteintrittsklappe umfasst, oberhalb des Verdampfers mit variabler Position, um die Mischung der externen Luft des Fahrzeugs und der Luft, die in dem Fahrgastraum des Fahrzeugs aufgenommen wurde zu ermöglichen und **dadurch gekennzeichnet, dass** die ersten Bewertungsmittel zwei Temperaturfühler umfassen, die eine Messung der Temperatur des externen Luftflusses im Fahrzeugs ($T_{ext}$) liefern können und eine Messung der Temperatur des Fahrgastinnenraumes ($T_{hab}$), wobei das elektronische Steuergerät (401) in der Lage ist, die Temperatur der Luft am Eingang des Verdampfers ($T_{ae}$) zu bewerten, über diese Werte und die Position der Lufteintrittsklappe.

**21.** Klimaanlage nach einem der vorstehenden Ansprüche, **dadurch gekennzeichnet, dass** die zweiten Bewertungsmittel einen Temperaturfühler (26) umfassen, der am Ausgang des Verdampfers angeordnet ist und einen Wert der Temperatur der Luft am Ausgang des Verdampfers ($T_{as}$) liefern kann.

**22.** Klimaanlage nach einem der Ansprüche 1 bis 20, **dadurch gekennzeichnet, dass** die Anlage eine Belüftungsöffnung umfasst, die durch ein Lüftungsrohr mit dem Verdampfer verbunden ist und den Fluss der klimatisierten Luft aufnehmen kann, der am Ausgang des Verdampfers erzeugt wird und **dadurch gekennzeichnet, dass** die zweiten Bewertungsmittel einen Temperaturfühler umfassen, der auf dem besagten Lüftungsrohr angeordnet ist, wobei das elektronische Steuergerät (401) die Temperatur der Luft am Ausgang des Verdampfers ($T_{as}$) bewerten kann, über die Temperatur, die von dem besagten Temperaturfühler gemessen wurde und einem vorher festgelegten Korrekturfaktor.

FIG.1a

FIG.1b

FIG.2

Estimer le débit m de fluide frigorigène —100

Mesurer/ Estimer la température de l'air pulsé en entrée de l'évaporateur Tae —102

Mesurer la température de l'air soufflé en sortie évaporateur Tas —104

Estimer la différence d'enthalpie du fluide ΔHev entre l'entrée et la sortie de l'évaporateur —106

Calculer la puissance sensible de l'air Psens à partir de Tae et Tas et du débit massique d'air Qair —109

Calculer la puissance frigorifique Pf à partir de m et de ΔHev —108

$P_f \gg P_s$ ? —110

0

Estimer Has à partir de Tas pour une humidité relative HR = 100 % —112

Calculer la différence d'enthalpie de l'air entre l'entrée et la sortie de l'évaporateur ΔHair à partir de Pf et de Qair —114

Calculer l'enthalpie de l'air pulsé en entrée de l'évaporateur Hae à partir de Has et ΔHair —116

Estimer l'humidité relative HRae en amont de l'évaporateur à partir de Hae et Tae. —118

FIG.3

FIG.4

FIG.5

FIG.6a

FIG.6b

EP 1 542 879 B1

**EP 1 542 879 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20020095942 A1
- FR 0116568
- JP 2001073941 A